# FASCICULE DE BREVET EUROPEEN

(11) **EP 2 699 837 B1**
(45) Date de publication et mention de la délivrance du brevet: **28.01.2015**
(21) Numéro de dépôt: 12717396.1
(22) Date de dépôt: 28.03.2012
(51) Int. Cl.: F17C 13/04

(54) **ROBINET DE FLUIDE SOUS PRESSION, RÉSERVOIR ET PROCÉDÉ DE REMPLISSAGE CORRESPONDANTS**
VENTIL FÜR EINE UNTER DRUCK STEHENDE FLÜSSIGKEIT, ENTSPRECHENDER BEHÄLTER UND FÜLLVERFAHREN
VALVE FOR PRESSURIZED FLUID, AND CORRESPONDING TANK AND FILLING METHOD

(30) Priorité: 22.04.2011 FR 1153495
(43) Date de publication de la demande: 26.02.2014
(73) Titulaire: L'Air Liquide Société Anonyme pour l'Etude et l'Exploitation des Procédés Georges Claude, 75007 Paris (FR)
(72) Inventeur: PISOT, Philippe, F-38140 Apprieu (FR); MULLER, Denis, F-92500 Rueil Malmaison (FR); SCHAAFF, Jean-Paul, F-95460 Ezanville (FR)
(74) Mandataire: De Cuenca, Emmanuel Jaime
(86) Numéro de dépôt international: PCT/FR2012/050643
(87) Numéro de publication internationale: WO 2012/143635

(56) Documents cités:
- EP-A1- 0 708 281
- DE-A1- 19 533 890
- FR-A- 1 387 267
- US-A- 4 911 403
- US-A- 5 037 063

## Description

La présente invention concerne un robinet de fluide sous pression, un réservoir et un procédé de remplissage correspondants.

L'invention concerne plus particulièrement un robinet de fluide sous pression à remplissages multiples, notamment pour un réservoir de gaz sous pression, comprenant un corps comportant une embase destinée à être fixée au niveau d'un orifice d'un réservoir sous pression, le corps définissant un circuit interne de soutirage/remplissage de fluide s'étendant entre une extrémité amont destinée à être mise en relation avec le volume de stockage d'un réservoir et une extrémité aval destinée à être mise en relation avec un organe utilisateur recevant ou distribuant du gaz, le robinet comprenant, disposés en série dans le circuit, un clapet de pression résiduelle et un clapet d'isolation, le robinet comprenant un organe d'actionnement du clapet d'isolation, l'organe d'actionnement étant mobile entre une première position dite « de fermeture » dans laquelle le clapet d'isolation obstrue le circuit et une seconde position dite « de soutirage » dans laquelle le clapet d'isolation n'obstrue pas le circuit.

La plupart des robinets de bouteilles de gaz (à ouverture/fermeture par volant ou par levier) possèdent une fonction anti-retour (clapet anti-retour = « NRV » ou « Non Retum Valve ») éventuellement associée à une fonction de maintien d'une pression résiduelle (« RPV »= « Residual Pressure Valve »). Ces systèmes ont permis de résoudre le problème de rupture de bouteilles lié à l'introduction accidentelle dans les bouteilles de médias étrangers (liquides, gaz) susceptibles de réagir avec le contenu et/ou le contenant.

Lorsque le port de soutirage sert également de port de remplissage, il est nécessaire d'utiliser un outil spécial (tel qu'un repoussoir) pour forcer l'ouverture du clapet anti-retour/de pression résiduelle. En effet, à défaut, la pression du gaz de remplissage tend à refermer ces clapets.

L'accidentologie, en particulier dans le cas de réservoirs utilisés pour l'oxygène, montre une très grande sensibilité de ce couplage du clapet anti-retour/pression résiduelle et de l'organe repoussoir intégré au raccord de remplissage. Ceci conduit à des incidents de fréquence importante : extrusions de joint d'étanchéité, inflammation de joints et/ou de métaux...

Une solution connue consiste à ajouter un piston de conception adaptée qui est situé dans l'orifice de remplissage/soutirage du robinet. Ce piston appelé généralement « clapet RPV/NRV » est systématiquement neutralisable mécaniquement par l'intermédiaire d'un repoussoir intégré dans l'outil de remplissage au cours des opérations de remplissage du réservoir. Les différentes dimensions afférentes ne sont que rarement normalisées. Ceci cause des dispersions de tolérance (profondeur du clapet, course du clapet) qui peuvent entraîner une incompatibilité géométrique entre le « clapet RPV/NRV » et l'outil de remplissage équipé de son repoussoir. Cela peut conduire à l'endommagement de pièces et/ou des conditions de débit de gaz non maîtrisées.

Le document EP220193 décrit un dispositif de remplissage destiné à être relié à l'entrée d'un réservoir à remplir. Ce dispositif comprend une entrée de gaz reliée à une source de gaz sous pression et deux orifices de sortie raccordés en parallèle à l'entrée via des vannes respectives. Un premier orifice de sortie est prévu pour être connecté au réservoir à remplir et le deuxième orifice est prévu pour une purge vers l'atmosphère. Les deux clapets sont commandés par les positions respectives d'un levier pivotant permettant sélectivement soit de fermer les deux clapets, soit d'ouvrir uniquement le clapet de sortie (pour remplir un réservoir) soit d'ouvrir uniquement le clapet de purge (pour purger le circuit interne du dispositif). Ce dispositif inadapté à une utilisation comme robinet de réservoir.

Le document US5018552 décrit un robinet mais à usage unique (sans reremplissage possible). Ce robinet comprend un clapet de pression résiduelle amont et un clapet d'isolement aval. Un poussoir permet d'ouvrir sélectivement le clapet d'isolation aval (côté raccord de sortie). Le clapet de pression résiduelle est prévu pour empêcher un re-remplissage du réservoir.

Le document US3981328 décrit un robinet de gaz sous pression à remplissages multiples comprenant un clapet d'isolation et un clapet de pression résiduelle disposés en série. Le clapet d'isolement est disposé en amont (du côté du réservoir) et le clapet de pression résiduelle est disposé en aval (du côté du port de remplissage/soutirage). Un volant rotatif commande l'ouverture/fermeture du clapet d'isolation. Pour permettre le remplissage, un outil spécial est nécessaire pour actionner une pièce concentrique à l'axe du volant rotatif. Cette pièce concentrique commande l'ouverture du clapet de pression résiduel aval. Cet arrangement pose cependant des problèmes. En effet, cette architecture ne permet pas à l'utilisateur de savoir si le clapet de pression résiduelle est ouvert ou s'il fonctionne normalement. Par ailleurs, le clapet de pression résiduel aval subit un choc violent de pression à chaque ouverture du clapet d'isolement principal par l'utilisateur, ce qui engendre d'une part une fatigue mécanique importante et d'autre part peut se révéler être un facteur propice aux inflammations dues au phénomène de compression adiabatique sous oxygène.

Le document EP708281A1 décrit un robinet conforme au préambule de la revendication 1.

Un but de la présente invention est de pallier tout ou partie des inconvénients de l'art antérieur relevés ci-dessus.

A cette fin, le robinet selon l'invention, par ailleurs conforme à la définition générique qu'en donne le préambule ci-dessus, est essentiellement caractérisé en ce que le clapet de pression résiduelle est situé en amont du clapet d'isolation et en ce que l'organe d'actionnement est déplaçable dans une troisième position dite « de remplissage» dans laquelle le clapet d'isolation n'obstrue pas le circuit et dans laquelle le clapet de pression de pression résiduelle est déplacé dans une position d'ouverture n'obstruant pas le circuit, quel que soit le différentiel de pression de part et d'autre du clapet de pression résiduelle.

Par ailleurs, des modes de réalisation de l'invention peuvent comporter l'une ou plusieurs des caractéristiques suivantes :
- l'extrémité aval du circuit débouche au niveau d'un port de remplissage/soutirage destiné aussi bien au remplissage qu'au soutirage, c'est-à-dire que le gaz soutiré par le robinet circule d'amont en aval dans le circuit via le clapet de pression résiduelle et le clapet d'isolation tandis que le gaz de remplissage circule dans le circuit de l'aval vers l'amont également via le clapet d'isolement et le clapet de pression résiduelle,
- l'organe d'actionnement du clapet d'isolation comporte une portion de contact, et, selon la position de l'organe d'actionnement relativement au corps, la portion de contact actionnant directement ou indirectement une extrémité du clapet d'isolation,
- dans les première et seconde positions de l'organe d'actionnement le fonctionnement du clapet de pression résiduelle n'est pas altéré, c'est-à-dire que le clapet de pression résiduelle obture le circuit lorsque le différentiel de pression entre ses extrémités amont et aval est inférieur à un seuil déterminé et n'obture pas le circuit lorsque le différentiel de pression entre ses extrémités amont et aval est supérieur à un seuil déterminé,
- dans sa troisième position, l'organe d'actionnement déplace le clapet de pression résiduelle dans une position d'ouverture n'obstruant pas le circuit par l'intermédiaire du clapet d'isolation,
- la deuxième position de soutirage de l'organe d'actionnement est située entre la première position de fermeture et la troisième position de remplissage,
- la première position de fermeture de l'organe d'actionnement est située entre la deuxième position de soutirage et la troisième position de remplissage,
- le passage de l'organe d'actionnement dans la troisième position de remplissage n'est possible qu'après le déverrouillage d'un verrou empêchant l'accès à la troisième position, le verrou (10) comportant au moins l'un parmi : un verrou mécanique, un verrou magnétique,
- le clapet de pression résiduelle comprend un mécanisme anti-retour (« NRV ») générant un effort sur le clapet le sollicitant vers sa position obstruant le circuit lorsque le clapet est soumis à un différentiel de pression entre l'amont et l'aval supérieur à un seuil déterminé,
- l'organe d'actionnement comprend un axe fileté coopérant avec un taraudage dans le corps du robinet, l'axe étant solidaire d'une poignée ou d'un volant manuellement actionnable,
- l'organe d'actionnement comprend un levier articulé relativement au corps, le levier comprenant un profil de came coopérant avec un axe mobile en translation dans le corps du robinet,
- le clapet d'isolation comprend un obturateur mobile relativement à un siège et sollicité par un organe de rappel vers le siège pour obstruer le circuit,
- le clapet de pression résiduelle comprend un obturateur mobile relativement à un siège et sollicité vers le siège par un organe de rappel pour obstruer le circuit,
- l'obturateur du clapet de pression résiduelle est sollicité vers son siège par l'organe de rappel de l'amont vers l'aval,
- l'obturateur du clapet d'isolement est sollicité vers son siège par l'organe de rappel de l'amont vers l'aval,
- le ou les organes de rappel comprennent un ou plusieurs ressorts, notamment de compression,
- l'organe d'actionnement actionne sélectivement par poussée le clapet d'isolement vers sa position n'obstruant pas le circuit,
- lorsque le clapet d'isolement est dans une position extrême n'obstruant pas le circuit, le clapet d'isolement actionne par poussée le clapet de pression résiduelle dans une position n'obstruant pas le circuit,
- l'extrémité aval de circuit forme un unique orifice pour le remplissage et le soutirage du fluide.

L'invention concerne également un réservoir de gaz sous pression comprenant un robinet conforme à l'une quelconque des caractéristiques ci-dessus ou ci-après.

L'invention concerne également un procédé de remplissage d'un réservoir de gaz sous pression comprenant un robinet l'une quelconque des caractéristiques ci-dessus ou ci-après, le procédé comportant une étape de déplacement de l'organe d'actionnement dans sa troisième position de remplissage pour ouvrir le clapet de pression résiduelle et le clapet d'isolation, puis une étape de délivrance d'un flux de fluide dans le réservoir via le circuit, de l'aval vers l'amont.

Selon d'autres particularités le robinet comprend un verrou débrayable empêchant par défaut l'accès à la troisième position de l'organe d'actionnement, le procédé comportant, préalablement à l'étape de déplacement de l'organe d'actionnement dans sa troisième position de remplissage, une étape de débrayage du verrou.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe, schématique et partielle, illustrant un robinet selon un premier exemple de réalisation de l'invention dont les deux clapets d'isolement et de pression résiduelle sont fermés,
- la figure 2 représente une vue similaire à celle de la figure 1 dans laquelle le clapet d'isolement est ouvert et le clapet de pression résiduelle est fermé,
- la figure 3 représente une vue similaire à celle de la figure 1 dans laquelle le clapet d'isolement est ouvert et le clapet de pression résiduelle est ouvert par différentiel de pression,
- la figure 4 représente une vue similaire à celle de la figure 1 dans laquelle le clapet d'isolement est ouvert et le clapet de pression résiduelle est ouvert par action mécanique forcée,
- la figure 5 représente une vue en coupe, schématique et partielle, illustrant un robinet selon un deuxième exemple de réalisation de l'invention dont les deux clapets d'isolement et de pression résiduelle sont fermés,
- la figure 6 représente une vue similaire à celle de la figure 5 dans laquelle le clapet d'isolement est ouvert et le clapet de pression résiduelle est fermé,
- la figure 7 représente une vue similaire à celle de la figure 1 dans laquelle le clapet d'isolement est ouvert et le clapet de pression résiduelle est ouvert par différentiel de pression,
- la figure 8 représente une vue similaire à celle de la figure 1 dans laquelle le robinet est monté sur une bouteille de fluide sous pression, le clapet d'isolement est ouvert et le clapet de pression résiduelle est ouvert par action mécanique forcée.

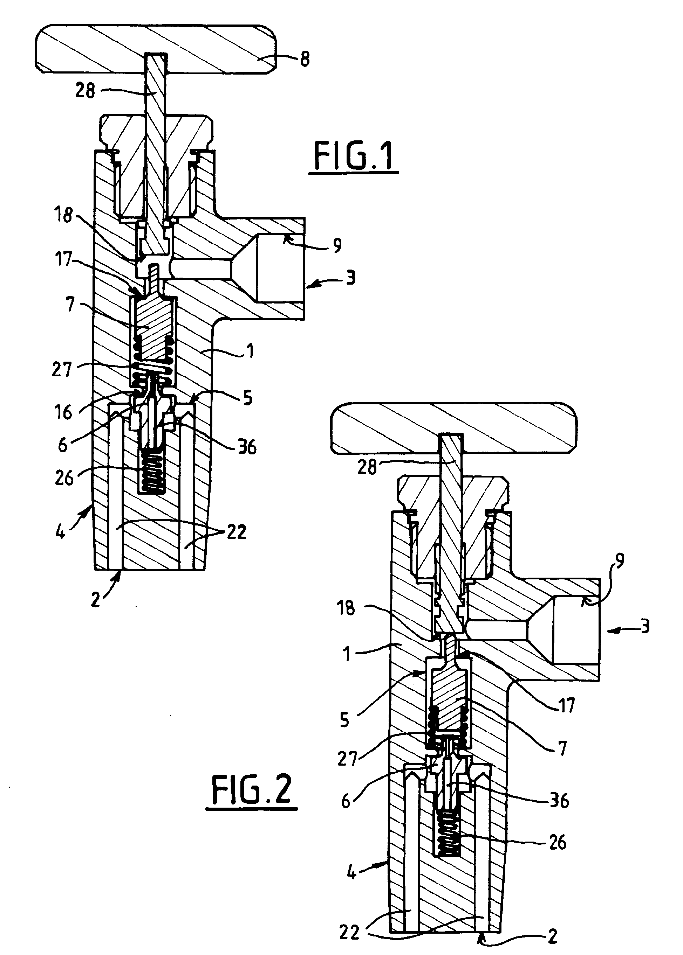

Le robinet illustré à la figure 1 comprend un corps 1 muni d'une embase 4 destinée à être fixée au niveau d'un orifice d'un réservoir sous pression. Par exemple l'embase 4 est filetée.

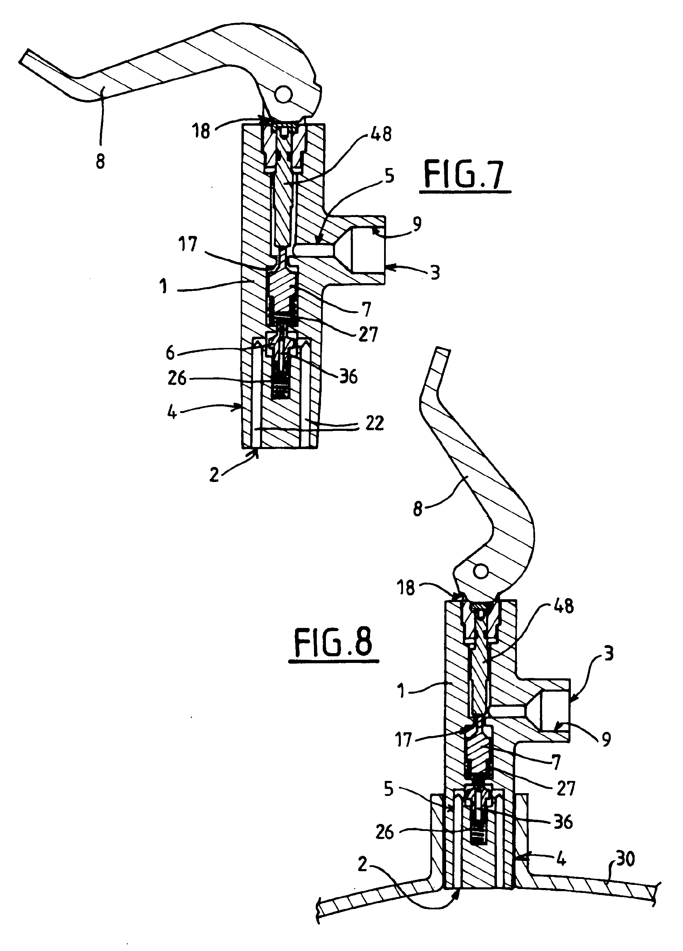

Le corps 1 définit un circuit 5 interne de soutirage/remplissage pour le fluide. Ce circuit 5 s'étend entre une extrémité amont 2 et une extrémité aval 3. L'extrémité 2 amont débouche au niveau de l'embase 4 et est destinée à être mise en relation avec le volume de stockage d'un réservoir (cf. référence 30, figure 8).

L'extrémité aval 3 de circuit 5 débouche au niveau d'un orifice du corps 1, et de préférence dans un port 9 de remplissage/soutirage destiné à être relié à un outil de remplissage (flux de fluide d'aval 3 vers l'amont 2) ou de soutirage (flux d'amont 2 vers l'aval 3).

Le robinet comprend, disposés en série dans le circuit 5, un clapet 6 de pression résiduelle et un clapet 7 d'isolation.

Le clapet 6 de pression résiduelle est situé en amont du clapet 7 d'isolation.

Le clapet 6 de pression résiduelle comprend par exemple un obturateur mobile relativement à un siège 16 formé dans le corps 1. L'obturateur mobile formant le clapet 6 est sollicité vers le siège 16 par un organe 26 de rappel pour obstruer le circuit 5. C'est-à-dire que le clapet 6 de pression résiduelle tend par défaut à obstruer (c'est-à-dire fermer) le passage de fluide dans le circuit 5. Ce clapet 6 de pression résiduelle s'ouvre en revanche si le différentiel de pression entre ses extrémités amont et aval est suffisant. Dans l'exemple de réalisation représenté (nullement limitatif), l'obturateur du clapet 6 de pression résiduelle est repoussé vers le siège 16 de l'amont vers l'aval. Par exemple un ou deux canaux 22 internes relient l'extrémité amont 2 du circuit 5 à une surface aval du clapet 6 de sorte que lorsque la pression en amont excède l'effort du ressort 26, le clapet 6 est repoussé vers l'amont et s'écarte de son siège pour ouvrir le circuit 5.

Comme représenté, le clapet 6 de pression résiduelle peut comprendre un mécanisme 36 anti-retour (« NRV ») générant un effort sur le clapet 6 le sollicitant vers sa position obstruant le circuit 5 lorsque le clapet 6 est soumis à un différentiel de pression entre l'amont et l'aval supérieur à un seuil déterminé.

Le mécanisme 36 anti-retour comprend, par exemple, un canal interne communiquant respectivement avec les parties aval et amont du circuit 5. De cette façon, lorsque la pression de fluide est relativement grande en aval (en cas de remplissage par l'extrémité aval 3), du fluide sous pression traverse le corps du clapet 6 via le canal 36. Le différentiel de sections aval et amont du clapet 6 est prévu pour provoquer en réaction un effort qui tend à refermer le clapet 6 sur son siège 16. Ceci permet d'empêcher les remplissages « sauvages » utilisant la pression du fluide.

Le clapet 7 d'isolation peut comprendre également un obturateur mobile relativement à un siège 17. L'obturateur est sollicité vers le siège 17 par un organe 27 de rappel tel qu'un ressort 27 pour obstruer par défaut le circuit 5.

Dans l'exemple de réalisation représenté (nullement limitatif), l'obturateur du clapet 7 de pression résiduelle est repoussé vers le siège 17 de l'amont vers l'aval par un ressort, par exemple un ressort de compression.

Le robinet comprend classiquement un organe 8 d'actionnement du clapet 7 d'isolation pour ouvrir sélectivement ce dernier. L'organe 8 d'actionnement comprend par exemple une extrémité supérieure formant une poignée solidaire d'un axe 28 monté rotatif dans le corps 1 du robinet. L'axe 28 est par exemple fileté et coopère avec un taraudage dans le corps 1 du robinet. Dans une première position de fermeture de l'organe 8 d'actionnement, le clapet 7 d'isolation est fermé.

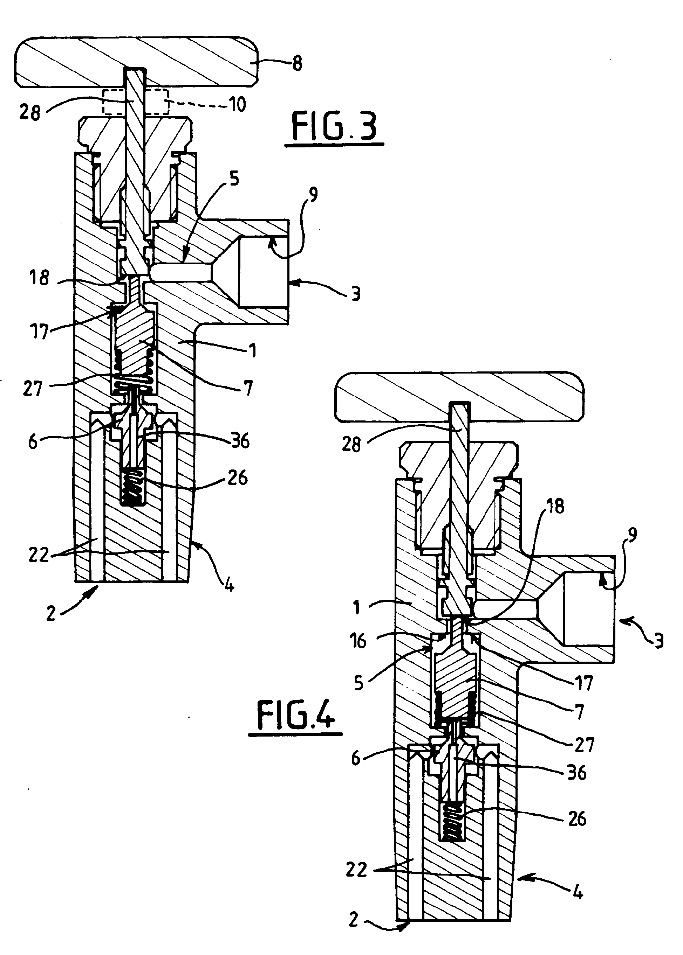

Selon la rotation de la poignée, dans une seconde position de soutirage de l'organe 8 d'actionnement, l'extrémité 18 de l'axe 28 vient repousser l'aval du clapet 7 d'isolement pour le séparer de son siège 17 et ainsi ouvrir le passage du circuit 5 (cf. figures 1 et 2). Dans cette position d'ouverture du clapet 7 d'isolement, le clapet 6 de pression résiduelle et anti-retour fonctionne normalement et est donc fermé (cf. figure 2) ou ouvert (cf. figure 3) selon le différentiel de pression entre les extrémités amont et aval. Ceci permet le soutirage d'amont 2 vers la sortie aval 3.

Par exemple, le clapet 7 d'isolement est déplacé de quelques millimètres (par exemple deux à quatre millimètres) pour assurer un débit de soutirage de l'amont vers l'aval sans perturber le fonctionnement du clapet 6 de pression résiduelle/anti-retour.

Lorsque l'organe 8 d'actionnement est disposé dans une troisième position de remplissage (cf. figure 4), l'extrémité 18 de l'axe 28 repousse le clapet 7 d'isolement dans une position amont extrême dans laquelle le clapet 7 d'isolement vient repousser vers l'amont le clapet 6 de pression résiduelle et anti-retour. Le clapet 6 de pression résiduelle et anti-retour est ainsi ouvert mécaniquement, quel que soit le différentiel de pression amont-aval de part et d'autre dudit clapet 6. Ceci permet de remplir un réservoir (circulation de fluide de l'aval 3 vers l'amont 2).

Dans cette position, les deux clapets 6, 7 ménagent des passages suffisants pour des débits de remplissage important (coefficient de débit Cv de l'ordre de 0,4 par exemple), pour limiter le temps de remplissage sans entraîner de risque sécurité comme un échauffement exagéré.

Le clapet 6 de pression résiduelle/anti-retour est de préférence placé dans le même conduit du circuit 5 et de préférence selon un même axe que le clapet 7 d'isolement. D'autres orientations peuvent cependant être envisagées permettant l'actionnement du clapet 6 par le clapet 7 d'isolement.

Cette architecture permet de disposer le clapet 6 de pression résiduelle/anti-retour en amont du clapet d'isolement tout en simplifiant la cinématique de connexion lors des opérations de remplissage.

En effet, cette architecture permet de s'affranchir d'un repoussoir dans l'outil de remplissage. Un seul organe 8 d'actionnement permet de gérer toutes les configurations (fermeture/soutirage/remplissage).

Les opérations de remplissage (connexion d'un outil de remplissage sur le port 9 du robinet, remplissage proprement dit, déconnexion de l'outil) de même que les opérations de maintenance sont donc fortement simplifiées et deviennent plus fiables.

La première position (cf. figure 1) de l'organe 8 d'actionnement permet de sécuriser la fermeture, par exemple pour une phase de transport du réservoir. La seconde position (cf. figures 2 et 3) de l'organe 8 d'actionnement permet le soutirage. La troisième position (cf. figure 4) de l'organe 8 d'actionnement permet le remplissage. On peut envisager une position intermédiaire entre les première et seconde positons dans laquelle le clapet d'isolement est fermé mais l'extrémité de l'axe affleure sur le clapet 7 d'isolement pour être prêt à une ouverture rapide.

De préférence, la troisième position de l'organe 8 d'actionnement n'est pas facilement accessible ou accessible uniquement via une cinématique particulière ou accessible uniquement après un effort supérieur ou un déverrouillage d'un verrou 10 (cf. figure 3) empêchant l'accès à la troisième position. Le verrou 10 comporte par exemple au moins l'un parmi : un verrou mécanique, un verrou magnétique.

De préférence, le retour à une autre position que la troisième position réenclenche automatiquement le verrouillage, par exemple élastiquement.

Au moins une des positions ci-dessus peut le cas échéant être stable et marquée dans le déplacement de l'organe 8 d'actionnement.

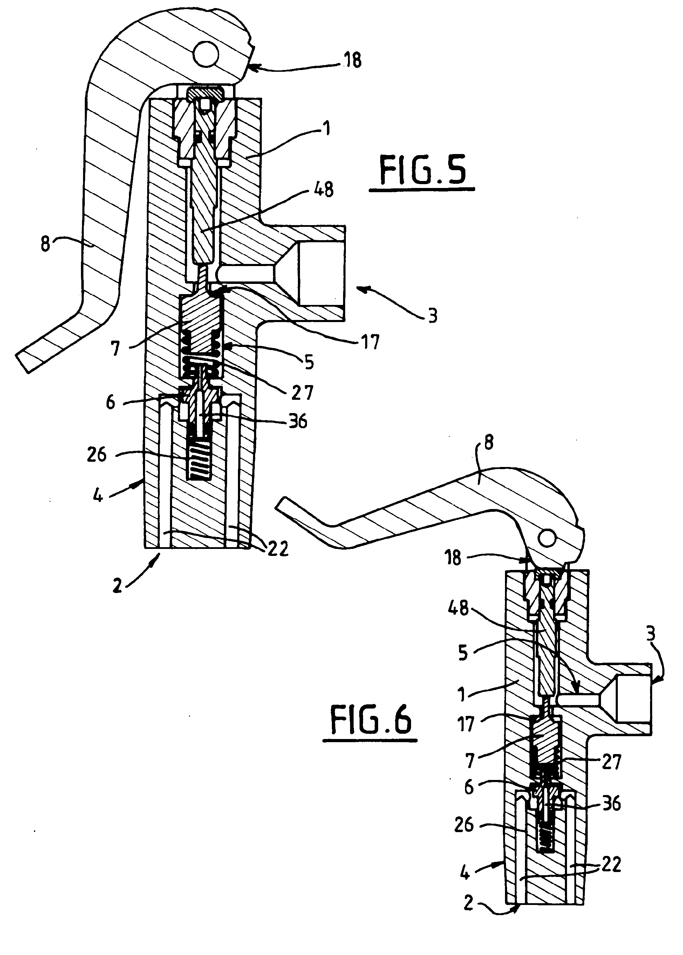

Les figures 5 à 8 illustrent une autre variante de réalisation du robinet. Les éléments identiques à ceux décrits ci-dessus sont désignés par les mêmes références numériques et ne sont pas décrits une seconde fois. Le mode de réalisation des figures 5 à 8 se distingue de celui des figures 1 à 4 uniquement en ce que l'organe 8 d'actionnement comporte un levier articulé sur le corps et en ce que, à la figure 8, le robinet est monté dans l'orifice d'un réservoir 30. Les états d'ouverture/fermeture des deux clapets 6, 7 des figures 5 à 8 correspondent respectivement aux états des figures 1 à 4.

L'organe 8 d'actionnement comprend un levier articulé relativement au corps 1. Le levier comprend par exemple un profil 18 de came coopérant avec une première extrémité d'un axe 48 mobile en translation dans le corps 1 du robinet (de façon étanche). La seconde extrémité de l'axe 48 mobile vient en contact avec l'extrémité aval du clapet 7 d'isolement.

Dans la première position (cf. figure 5, les deux clapets 6, 7 fermés); le levier de l'organe 8 d'actionnement est par exemple disposé le long du corps (mais pas nécessairement, une autre position angulaire du levier pourrait correspondre à cet état de fermeture).

Dans la seconde position de soutirage (cf. figures 6 et 7, le clapet 7 d'isolement ouvert); le levier de l'organe 8 d'actionnement est par exemple pivoté d'un angle de 20 à 120 degrés par rapport à la première position.

Dans la troisième position de remplissage (cf. figure 8, les clapets 7 ouverts mécaniquement); le levier de l'organe 8 d'actionnement est par exemple pivoté d'un angle de 120 à 320 degrés par rapport à la première position.

Comme précédemment, les positions peuvent le cas échéant être stables et marquées dans le déplacement de l'organe 8 d'actionnement, par exemple via un profil de came 1 adapté.

De même, la troisième position de l'organe 8 d'actionnement n'est pas facilement accessible ou accessible uniquement via une cinématique particulière ou accessible uniquement après un effort ou un déverrouillage d'un verrou empêchant par défaut l'accès à la troisième position.

Dans tous les cas, la deuxième position de soutirage de l'organe 8 d'actionnement peut être située par exemple soit entre la première position de fermeture et la troisième position de remplissage, soit entre la deuxième position de soutirage et la troisième position de remplissage.

## Revendications

1. Robinet de fluide sous pression à remplissages multiples, notamment pour un réservoir de gaz sous pression, comprenant un corps (1) comportant une embase (4) destinée à être fixée au niveau d'un orifice d'un réservoir sous pression, le corps (1) définissant un circuit (5) interne de soutirage/remplissage de fluide s'étendant entre une extrémité amont (2) destinée à être mise en relation avec le volume de stockage d'un réservoir et une extrémité aval (3) destinée à être mise en relation avec un organe utilisateur recevant ou distribuant du gaz, le robinet comprenant, disposés en série dans le circuit (5), un clapet (6) de pression résiduelle et un clapet (7) d'isolation, le robinet comprenant un organe (8) d'actionnement du clapet (7) d'isolation pour commander sélectivement l'obstruction ou non du circuit (5), l'organe (8) d'actionnement étant mobile entre une première position dite « de fermeture » dans laquelle le clapet (7) d'isolation obstrue le circuit (5) et une seconde position dite « de soutirage » dans laquelle le clapet (7) d'isolation n'obstrue pas le circuit (5), le clapet (6) de pression résiduelle comprenant un obturateur mobile relativement à un siège, l'obturateur étant sollicité vers le siège via un organe de rappel **caractérisé en ce que**, le clapet d'isolation (7) est distinct du clapet (6) de pressions résiduelle et comprend un obturateur, distinct de celui du clapet (6) de pression résiduelle, mobile relativement à un siège distinct de celui du clapet (6) de pression résiduelle et sollicité vers son siège via un organe de rappel distinct de celui du clapet (6) de pression résiduelle, le clapet (6) de pression résiduelle étant situé en amont du clapet (7) d'isolation et **en ce que** l'organe (8) d'actionnement est déplaçable dans une troisième position dite « de remplissage» dans laquelle l'organe (8) d'actionnement contraint le clapet (7) d'isolation à ne pas obstruer le circuit (5) et dans laquelle le clapet de pression (6) de pression résiduelle est déplacé dans une position d'ouverture n'obstruant pas le circuit (5), quel que soit le différentiel de pression de part et d'autre du clapet (6) de pression résiduelle.

2. Robinet selon la revendication 1, **caractérisé en ce que** l'extrémité aval (3) de circuit débouche au niveau d'un port (9) de remplissage/soutirage destiné aussi bien au remplissage qu'au soutirage, c'est-à-dire que le gaz soutiré par le robinet circule d'amont (2) en aval (3) dans le circuit (5) via le clapet (6) de pression résiduelle et le clapet (7) d'isolation tandis que le gaz de remplissage circule dans le circuit (5) de l'aval (3) vers l'amont (2) également via le clapet (7) d'isolement et le clapet (6) de pression résiduelle.

3. Robinet selon la revendication 1 ou 2, **caractérisé en ce que** l'organe (8) d'actionnement du clapet (7) d'isolation comporte une portion (18) de contact, et **en ce que**, selon la position de l'organe (8) d'actionnement relativement au corps (1), la portion (18) de contact actionne directement ou indirectement une extrémité du clapet (7) d'isolation.

4. Robinet selon l'une quelconque des revendications 1 à 3, **caractérisé en ce que**, dans ses première et seconde positions l'organe (8) d'actionnement ne contraint pas le fonctionnement ou la position du clapet (6) de pression résiduelle, c'est-à-dire que le clapet (6) de pression résiduelle obture le circuit (5) lorsque le différentiel de pression entre ses extrémités amont et aval est inférieur à un seuil déterminé et n'obture pas le circuit (5) lorsque le différentiel de pression entre ses extrémités amont et aval est supérieur à un seuil déterminé.

5. Robinet selon l'une quelconque des revendications 1 à 4, **caractérisé en ce que**, dans sa troisième position, l'organe (8) d'actionnement déplace le clapet (6) de pression résiduelle dans une position d'ouverture n'obstruant pas le circuit (5) par l'intermédiaire du clapet (7) d'isolation.

6. Robinet selon l'une quelconque des revendications 1 à 5, **caractérisé en ce que** la deuxième position de soutirage de l'organe (8) d'actionnement est située entre la première position de fermeture et la troisième position de remplissage.

7. Robinet selon l'une quelconque des revendications 1 à 6, **caractérisé en ce que** dans sa troisième position, l'organe (8) d'actionnement déplace le clapet (7) d'isolation dans une position amont extrême n'obstruant pas le circuit (5), et dans laquelle le clapet (7) d'isolation actionne par poussée le clapet (6) de pressions résiduelle dans une position n'obstruant pas le circuit.

8. Robinet selon l'une quelconque des revendications 1 à 7, **caractérisé en ce qu'**il comporte un verrou (10) de limitation du déplacement de l'organe (8) d'actionnement et **en ce que** le passage de l'organe (8) d'actionnement dans la troisième position de remplissage n'est possible qu'après le déverrouillage du verrou (10) empêchant l'accès à la troisième position, le verrou (10) comportant au moins l'un parmi : un verrou mécanique, un verrou magnétique.

9. Robinet selon l'une quelconque des revendications 1 à 8, **caractérisé en ce que** le clapet (6) de pression résiduelle comprend un mécanisme anti-retour (« NRV ») générant un effort sur le clapet (6) le sollicitant vers sa position obstruant le circuit lorsque le clapet (6) est soumis à un différentiel de pression entre l'amont et l'aval supérieur à un seuil déterminé.

10. Robinet selon l'une quelconque des revendications 1 à 9, **caractérisé en ce que** l'organe (8) d'actionnement comprend un axe (28) fileté coopérant avec un taraudage dans le corps (1) du robinet, l'axe (28) étant solidaire d'une poignée ou d'un volant manuellement actionnable.

11. Robinet selon l'une quelconque des revendications 1 à 9, **caractérisé en ce que** l'organe (8) d'actionnement comprend un levier articulé relativement au corps (1), le levier comprenant un profil (18) de came coopérant avec un axe (48) mobile en translation dans le corps (1) du robinet.

12. Réservoir de gaz sous pression comprenant un robinet conforme à l'une quelconque des revendications 1 à 11.

13. Procédé de remplissage d'un réservoir de gaz sous pression comprenant un robinet l'une quelconque des revendications 1 à 12, **caractérisé en ce qu'**il comporte une étape de déplacement de l'organe (8) d'actionnement dans sa troisième position de remplissage pour ouvrir le clapet (6) de pression résiduelle et le clapet (7) d'isolation, puis une étape de délivrance d'un flux de fluide dans le réservoir via le circuit (5), de l'aval (3) vers l'amont (2).

14. Procédé selon la revendication 13, **caractérisé en ce que** le robinet comprend un verrou débrayable empêchant par défaut l'accès à la troisième position de l'organe (8) d'actionnement et **en ce que** le procédé comporte, préalablement à l'étape de déplacement de l'organe (8) d'actionnement dans sa troisième position de remplissage, une étape de débrayage du verrou.

## Patentansprüche

1. Schließhahn für ein unter Druck stehendes Fluid für mehrfache Füllungen, insbesondere für einen unter Druck stehenden Gasbehälter, der einen Körper (1) aufweist, der einen Sockel (4) umfasst, der dazu bestimmt ist, in der Ebene einer Öffnung eines unter Druck stehenden Behälters befestigt zu werden, wobei der Körper (1) einen internen Kreislauf (5) für eine Entnahme/Füllung von Fluid bildet, der sich zwischen einem stromaufwärts befindlichen Ende (2), das dazu bestimmt ist, mit dem Speichervolumen eines Behälters in Verbindung gebracht zu werden, und einem stromabwärts befindlichen Ende (3) erstreckt, das dazu bestimmt ist, mit einem Nutzungsorgan in Verbindung gebracht zu werden, das Gas aufnimmt oder verteilt, wobei der Schließhahn ein Restdruckventil (6) und ein Absperrventil (7) aufweist, die in dem Kreislauf (5) in Reihe angeordnet sind, wobei der Schließhahn ein Betätigungsorgan (8) des Absperrventils (7) aufweist, um selektiv das Blockieren oder Nicht-Blockieren des Kreislaufs (5) zu steuern, wobei das Betätigungsorgan (8) zwischen einer ersten Stellung, der "Schließstellung", in der das Absperrventil (7) den Kreislauf (5) blockiert, und einer zweiten Stellung, der "Entnahmestellung" beweglich ist, in der das Absperrventil (7) den Kreislauf nicht blockiert, wobei das Restdruckventil (6) einen Verschlusskörper aufweist, der relativ zu einem Sitz beweglich ist, wobei der Verschlusskörper über ein Rückholorgan zu dem Sitz gezogen wird, **dadurch gekennzeichnet, dass** das Absperrventil (7) von dem Restdruckventil (6) verschieden ist und einen Verschlusskörper aufweist, der von demjenigen des Restdruckventils (6) verschieden ist, relativ zu einem Sitz beweglich ist, der von demjenigen des Restdruckventils (6) verschieden ist und zu seinem Sitz über ein Rückholorgan gezogen wird, das von demjenigen des Restdruckventils (6) verschieden ist, wobei das Restdruckventil (6) stromaufwärts des Absperrventils (7) gelegen ist, und dadurch, dass das Betätigungsorgan (8) in eine dritte Stellung, die "Füllstellung", verschiebbar ist, in der das Betätigungsorgan (8) das Absperrventil (7) zwingt, den Kreislauf (5) nicht zu blockieren, und in der das Restdruckventil (6) in eine Öffnungsstellung verschoben wird, die den Kreislauf (5) nicht blockiert, ungeachtet des zu beiden Seiten des Restdruckventils (6) bestehenden Druckunterschieds.

2. Schließhahn nach Anspruch 1, **dadurch gekennzeichnet, dass** das stromabwärts befindliche Ende (3) des Kreislaufs auf der Ebene einer Füll-/Entnahme-Anschlussöffnung (9) mündet, die sowohl zum Füllen als auch zur Entnahme bestimmt ist, das heißt, das über den Schließhahn entnommene Gas in dem Kreislauf (5) über das Restdruckventil (6) und das Absperrventil (7) von stromaufwärts (2) nach stromabwärts (3) fließt, während das Gas beim Füllen in dem Kreislauf (5) von stromabwärts (3) nach stromaufwärts (2), ebenfalls über das Absperrventil (7) und das Restdruckventil (6) fließt.

3. Schließhahn nach Anspruch 1 oder 2, **dadurch gekennzeichnet, dass** das Betätigungsorgan (8) des Absperrventils (7) einen Kontaktabschnitt (18) aufweist, und dadurch, dass je nach relativer Stellung des Betätigungsorgans (8) zum Körper (1) der Kontaktabschnitt (18) ein Ende des Absperrventils (7) direkt oder indirekt betätigt.

4. Schließhahn nach einem der Ansprüche 1 bis 3, **dadurch gekennzeichnet, dass** das Betätigungsorgan (8) in seiner ersten und zweiten Stellung das Funktionieren oder die Stellung des Restdruckventils (6) nicht erzwingt, das heißt, dass das Restdruckventil (6) den Kreislauf (5) blockiert, wenn der Druckunterschied zwischen seinen stromaufwärts und stromabwärts befindlichen Enden unter einem festgelegten Schwellenwert liegt, und den Kreislauf (5) nicht blockiert, wenn der Druckunterschied zwischen seinen stromaufwärts und stromabwärts befindlichen Enden über einem festgelegten Schwellenwert liegt.

5. Schließhahn nach einem der Ansprüche 1 bis 4, **dadurch gekennzeichnet, dass** das Betätigungsorgan (8) in seiner dritten Stellung das Restdruckventil (6) in eine Öffnungsstellung verschiebt, die den Kreislauf (5) nicht mehr durch das Absperrventil (7) blockiert.

6. Schließhahn nach einem der Ansprüche 1 bis 5, **dadurch gekennzeichnet, dass** die zweite Stellung des Betätigungsorgans (8) zur Entnahme zwischen der ersten Stellung zum Schließen und der dritten Stellung zum Füllen liegt.

7. Schließhahn nach einem der Ansprüche 1 bis 6, **dadurch gekennzeichnet, dass** das Betätigungsorgan (8) in seiner dritten Stellung das Absperrventil (7) in eine Position zum stromaufwärts befindlichen Ende verschiebt, die den Kreislauf (5) nicht blockiert und in der das Absperrventil (7) das Restdruckventil (6) mittels Schub in eine Stellung drückt, die den Kreislauf nicht blockiert.

8. Schließhahn nach einem der Ansprüche 1 bis 7, **dadurch gekennzeichnet, dass** er einen Verschiebebegrenzungsriegel (10) des Betätigungsorgans (8) aufweist, und dadurch, dass der Übergang des Betätigungsorgans (8) in die dritte Stellung zum Füllen erst nach dem Lösen des Riegels (10) möglich ist, der den Zugang zur dritten Stellung verhindert, wobei der Riegel (10) mindestens einen eines mechanischen Riegels, eines magnetischen Riegels aufweist.

9. Schließhahn nach einem der Ansprüche 1 bis 8, **dadurch gekennzeichnet, dass** das Restdruckventil (6) einen Rücklaufsperrmechanismus ("NRV") aufweist, der eine Kraft auf das Ventil (6) ausübt und es in seine Position zieht, in der es den Kreislauf blockiert, wenn das Ventil (6) einem Druckunterschied zwischen stromaufwärts und stromabwärts ausgesetzt ist, der über einem festgelegten Schwellenwert liegt.

10. Schließhahn nach einem der Ansprüche 1 bis 9, **dadurch gekennzeichnet, dass** das Betätigungsorgan (8) eine Achse (28) mit einem Gewinde aufweist, die mit einem Innengewinde in dem Körper (1) des Schließhahns zusammenwirkt, wobei die Achse (28) fest mit einem Griff oder einem Handrad verbunden ist, der bzw. das manuell betätigbar ist.

11. Schließhahn nach einem der Ansprüche 1 bis 9, **dadurch gekennzeichnet, dass** das Betätigungsorgan (8) einen relativ zum Körper (1) gelenkig angebrachten Hebel aufweist, wobei der Hebel ein Nockenprofil (18) aufweist, das mit einer Achse (48) zusammenwirkt, die verschiebbar in dem Körper (1) des Schließhahns beweglich ist.

12. Unter Druck stehender Gasbehälter, der einen Schließhahn gemäß einem der Ansprüche 1 bis 11 aufweist.

13. Verfahren zum Füllen eines unter Druck stehenden Gasbehälters, das einen Schließhahn nach einem der Ansprüche 1 bis 12 aufweist, **dadurch gekennzeichnet, dass** es einen Schritt zur Verschiebung des Betätigungsorgans (8) in seine dritte Stellung zum Füllen aufweist, um das Restdruckventil (6) und das Absperrventil (7) zu öffnen, danach einen Schritt zur Abgabe eines Fluidstroms von stromabwärts (3) nach stromaufwärts (2) in den Behälter über den Kreislauf (5).

14. Verfahren nach Anspruch 13, **dadurch gekennzeichnet, dass** der Schließhahn einen ausrückbaren Riegel aufweist, der den Zugang zu der dritten Stellung des Betätigungsorgans (8) standardmäßig verhindert, und dadurch, dass das Verfahren vor dem Schritt zur Verschiebung des Betätigungsorgans (8) in seine dritte Stellung zum Füllen einen Schritt zum Lösen des Riegels aufweist.

## Claims

1. Pressurised-fluid tap for multiple fillings, in particular for a pressurised-gas tank, comprising a body (1) having a base (4) intended to be fixed in the region of an orifice of a pressurised tank, the body (1) defining an internal circuit (5) for drawing-off/filling fluid extending between an upstream end (2), intended to be connected to the storage volume of a tank, and a downstream end (3), intended to be connected to a user member receiving or dispensing gas, the tap comprising, arranged in series in the circuit (5), a residual-pressure valve (6) and an isolation valve (7), the tap comprising a member (8) for actuating the isolation valve (7) in order to selectively control the obstruction or not of the circuit (5), the actuation member (8) being able to move between a first so-called "closure" position in which the isolation valve (7) obstructs the circuit (5) and a second so-called "drawing-off" position in which the isolation valve (7) does not obstruct the circuit (5), the residual-pressure valve (6) comprising a shutter which is able to move relative to a seat, the shutter being biased towards the seat by a return member, **characterised in that** the isolation valve (7) is distinct from the residual-pressure valve (6) and comprises a shutter distinct from that of the residual-pressure valve (6) which is able to move relative to a seat distinct from that of the residual-pressure valve (6) and which is biased towards its seat by a return member distinct from that of the residual-pressure valve (6), the residual-pressure valve (6) being situated upstream of the isolation valve (7), and **in that** the actuation member (8) can be moved into a third so-called "filling" position in which the actuation member (8) forces the isolation valve (7) not to obstruct the circuit (5) and in which the residual-pressure valve (6) is moved into an opening position not obstructing the circuit (5), whatever the pressure differential on either side of the residual-pressure valve (6).

2. Tap according to claim 1, **characterised in that** the downstream end (3) of the circuit emerges in the region of a filling/drawing-off port (9) intended for both filling and drawing-off, that is to say the gas drawn off by the tap flows from upstream (2) to downstream (3) in the circuit (5) via the residual-pressure valve (6) and the isolation valve (7) while the filling gas flows in the circuit (5) from downstream (3) to upstream (2) also via the isolation valve (7) and the residual-pressure valve (6).

3. Tap according to either claim 1 or claim 2, **characterised in that** the member (8) for actuating the isolation valve (7) comprises a contact portion (18) and **in that**, depending on the position of the actuation member (8) relative to the body (1), the contact portion (18) directly or indirectly actuates one end of the isolation valve (7).

4. Tap according to any of claims 1 to 3, **characterised in that**, in its first and second positions, the actuation member (8) does not force the functioning or the position of the residual-pressure valve (6), that is to say the residual-pressure valve (6) closes off the circuit (5) when the pressure differential between the upstream and downstream ends of said valve is below a given threshold and does not close off the circuit (5) when the pressure differential between the upstream and downstream ends of said valve is above a given threshold.

5. Tap according to any of claims 1 to 4, **characterised in that**, in its third position, the actuation member (8) moves the residual-pressure valve (6) into an opening position not obstructing the circuit (5) by means of the isolation valve (7).

6. Tap according to any of claims 1 to 5, **characterised in that** the second drawing-off position of the actuation member (8) is situated between the first closure position and the third filling position.

7. Tap according to any of claims 1 to 6, **characterised in that**, in its third position, the actuation member (8) moves the isolation valve (7) into an extreme upstream position not obstructing the circuit (5) and in which the isolation valve (7) actuates the residual-pressure valve (6), by means of pushing, into a position not obstructing the circuit.

8. Tap according to any of claims 1 to 7, **characterised in that** it comprises a bolt (10) for limiting the movement of the actuation member (8), and **in that** the passage of the actuation member (8) into the third filling position is possible only after the release of the bolt (10) preventing access to the third position, the bolt (10) comprising at least one from: a mechanical bolt, a magnetic bolt.

9. Tap according to any of claims 1 to 8, **characterised in that** the residual-pressure valve (6) comprises a non-return mechanism ("NRV") generating a force on the valve (6) biasing it towards its position obstructing the circuit when the valve (6) is subjected to a pressure differential between upstream and downstream above a given threshold.

10. Tap according to any of claims 1 to 9, **characterised in that** the actuation member (8) comprises a threaded spindle (28) cooperating with a thread in the body (1) of the tap, the spindle (28) being rigidly connected to a manually actuatable handle or wheel.

11. Tap according to any of claims 1 to 9, **characterised in that** the actuation member (8) comprises a lever articulated relative to the body (1), the lever comprising a cam profile (18) cooperating with a spindle (48) able to move in translation in the body (1) of the tap.

12. Pressurised-gas tank comprising a tap according to any of claims 1 to 11.

13. Method for filling a pressurised-gas tank comprising a tap according to any of claims 1 to 12, **characterised in that** it comprises a step of moving the actuation member (8) into its third filling position in order to open the residual-pressure valve (6) and the isolation valve (7), and then a step of delivering a flow of fluid into the tank via the circuit (5), from downstream (3) to upstream (2).

14. Method according to claim 13, **characterised in that** the tap comprises a disengageable bolt preventing, by default, access to the third position of the actuation member (8), and **in that** the method comprises, prior to the step of moving the actuation member (8) into its third filling position, a step of disengaging the bolt.
